# EUROPEAN PATENT APPLICATION

(11) **EP 2 869 177 A1**
(43) Date of publication of application: **06.05.2015**
(21) Application number: 13810616.6
(22) Date of filing: 09.05.2013
(51) Int. Cl.: G06F 3/0488, G06F 3/041, G06F 3/048

(54) **PORTABLE TERMINAL DEVICE, METHOD FOR OPERATING PORTABLE TERMINAL DEVICE, AND PROGRAM FOR OPERATING PORTABLE TERMINAL DEVICE**

(30) Priority: 27.06.2012 JP 2012143757
(71) Applicant: NEC CASIO Mobile Communications, Ltd., Kawasaki-shi, Kanagawa 211-8666 (JP)
(72) Inventor: INOMATA, Masayoshi, Kawasaki-shi Kanagawa 211-8666 (JP)
(74) Representative: Vossius & Partner Patentanwälte Rechtsanwälte mbB
(86) International application number: PCT/JP2013/063025
(87) International publication number: WO 2014/002615

(57) **Abstract**

A portable terminal device according to the present invention determines whether the portable terminal device is used in an opened state or a closed state (for example, a folded state) using a terminal shape determination unit of a CPU. A browser running determination unit determines whether a browser executed by the CPU of the portable terminal device is running. A touch panel determination unit performs a determination as to whether a touch operation is being performed on a back screen and a determination as to whether a touch operation is being performed on only the back screen. A touch area determination unit performs a determination as to whether a touch operation is being performed on an upper screen area and a determination as to whether a touch operation is being performed on a central screen area. A long-press touch determination unit performs a determination as to whether a touch operation is being performed having a predetermined length greater than a normal touch length.

## Description

### TECHNICAL FIELD

The present invention relates to a portable terminal device, a method for operating a portable terminal device, and a program for operating a portable terminal device and, particularly, to a portable terminal device, a method for operating a portable terminal device, and a program for operating a portable terminal device in which a browser operation on a front surface is enabled by a touch panel operation on a back surface.

### BACKGROUND ART

In recent portable terminal devices, the size and weight have been decreasing more and more, and there is not sufficient room in a key arrangement and a touch panel for inputting data and instructions. Accordingly, the keys and the touch panel for inputting data or instructions are generally installed on a front surface of a main body, as well as a back surface thereof. In such a scenario, for example, when a user uses a browser to call up and view a site, a situation arises in which the finger of a user obstructs the view of a site during operation. Particularly, when the user performs a touch operation on a browser display screen while a browser is running, a situation arises in which the finger of a user obstructs the view of a site during operation.

As an example of a well-known technology in this field, an electronic device including a display unit, and an input switch enabling input of a desired selection item, such as a portable phone, in which visibility of the display unit is good, and operability is excellent so that the desired item can be quickly selected is disclosed in, for example, Patent Document 1. Specifically, a touch panel switch for the display unit on the front surface of the electronic device is arranged on the back surface side, and a predetermined position of the touch panel switch corresponding to the desired item among selection items displayed on the display unit is pressed. Accordingly, a configuration in which the desired item is selectable is obtained. Therefore, even when there are a large number of selection items, a display is not hidden by fingers upon selection, and a display surface stays relatively clean. Thus, an electronic device in which visibility of display is good and operability is excellent so that the desired item can be quickly selected can be obtained.

Further, for example, a portable terminal in which a feeling of operation of a touch panel using a sub-display unit is not different between main screen use and sub-screen use is disclosed in Patent Document 2. Specifically, the portable terminal is a portable terminal in which an upper casing including a main display unit and a lower casing including input keys are retractably connected through a hinge or the like. In the lower casing, a back display unit including a touch panel is provided in a position reached by an index finger in a state in which a thumb is arranged on the input key when the portable terminal is held with one hand, on a surface opposite the main display unit. Further, a function is assigned to the touch panel to confront a function assignment screen displayed on the main display unit of the elongated terminal, and a position of the function assigned to the touch panel is dynamically changed according to a positional relationship between the upper casing and the lower casing.

Further, for example, an information processing device in which operability is improved by effectively using two displays, an input control method, a program, and a recording medium are disclosed in Patent Document 3. Specifically, in the information processing device, a first casing including a first display unit and a second casing including a second display unit are movably joined through a joint portion, and each of the first and second display units includes an input unit that receives an operation input by sensing contact with the display unit. The first casing and the second casing are closed in a state in which the surfaces having the display units provided thereon face each other. In an opened state, the surfaces of the respective casings having the display units provided thereon are jointed so as to be exposed to the outside and to change into a two-surface state. Thus, a detection means that detects the two-surface state, and a control means that controls an input from the input unit provided in one of the casings as an expanded input of the input unit provided in the other casing when the two-surface state is detected by the detection means are included.

Further, for example, a terminal device having good input operability and being capable of responding to various operation inputs is disclosed in Patent Document 4. Specifically, a panel display surface having a touch panel function provided on a front surface of the device, and a back surface operation surface having a touch pad arranged thereon provided on a back surface of the device are arranged. A scrollable screen is displayed on the panel display surface. In a state in which a predetermined detection area is set on the back surface operation surface in advance and a screen is displayed, the screen is scrolled when a drag operation in a predetermined direction is detected in the detection area. The scroll speed of the screen is set to correspond to an input position of the drag operation in a direction orthogonal to a predetermined direction in advance, and the image is scrolled at a speed corresponding to the input position of the drag operation in the direction orthogonal to the predetermined direction.

### [Document of the prior art]

### [Patent Documents]

[Patent Document 1]
   Japanese Unexamined Patent Application, First Publication No. 2002-077357
[Patent Document 2]
   Japanese Patent No. 4569411
[Patent Document 3]
   Japanese Unexamined Patent Application, First Publication No. 2011-209899
[Patent Document 4]
   Japanese Unexamined Patent Application, First Publication No. 2012-003305

### DISCLOSURE OF INVENTION

### [Problems to be solved by the invention]

A means in which a touch panel switch is arranged on a back surface side for a display unit on a front surface of an electronic device, such as the device described in Patent Document 1, is effective for achieving good operability by enabling a desired item to be quickly selected. However, when a desired item can be selected by pressing a predetermined position of the touch panel switch, independence of both of the screens is not achieved, and thus, this is not necessarily an optimal configuration that provides good operability.

Further, a means in which an upper casing including a main display unit and a lower casing including input keys are retractably connected through a hinge or the like, such as the device described in Patent Document 2, is effective in preventing a feeling of operation of a touch panel from being different between main screen use and sub-screen use. However, when the back display unit including the touch panel is provided in a position reached by an index finger in a state in which a thumb is arranged on the input key when the portable terminal is held with one hand, on a surface opposite to the main display unit, the two screens are not integrated, and it is necessary for the user to recognize a relationship between both of the screens and to become accustomed to operation thereof. Thus, this is not necessarily an optimal configuration that provides good operability.

Further, a means in which a first casing including a first display unit and a second casing including a second display unit are movably joined through a joint portion, such as the device described in Patent Document 3, is effective in improving operability. However, when the input from the input unit provided in one of the casings is controlled as an expanded input of the input unit provided in the other casing, the independence of the two screens is not achieved, and thus, this is not necessarily an optimal configuration that provides good operability.

Further, a means in which a panel display surface having a touch panel function is arranged on a front surface of a device, and a back surface operation surface having a touch pad is arranged on a back surface of the device, such as the device described in Patent Document 4, is effective in achieving good input operability and in being able to correspond to various operation inputs. However, a function that improves operability is not necessarily obtained with only a scroll operation function.

Incidentally, in the related art, decreases in the size and weight of portable terminal devices have progressed more and more, and there is not sufficient room for an arrangement space of keys and a touch panel for inputting data or instructions. Therefore, when a user starts up a browser to call and view any one site, a scenario arises in which a user's finger obstructs the view of a site. Particularly, when the user performs a touch operation on a browser display screen during browser running, a situation arises in which a user's finger obstructs the view of a site, thus solving such a problem is the object of the present invention. Of course, in the portable terminal device in the related art described above, this object cannot be achieved.

The present invention has been made in view of the above problems and an object of the present invention is to provide a portable terminal device, a method for operating a portable terminal device, and a program for operating a portable terminal device in which site viewing is prevented from being obstructed by, for example, a user's finger during a touch operation.

Another object of the present invention is to provide a portable terminal device, a method for operating a portable terminal device, and a program for operating a portable terminal device in which a touch operation by a user is enabled without the user needing to recognize a detailed touch position on both of the front and back display screens.

Still another object of the present invention is to provide a portable terminal device, a method for operating a portable terminal device, and a program for operating a portable terminal device in which more selection items can be input without newly providing, for example, operation buttons in a small arrangement space of a body of the portable terminal device.

### [Means for solving the problem]

In order to achieve the above object, a portable terminal device with a foldable casing in which both of a front display surface and a back display surface are configured as touch panels includes: a terminal shape determination unit configured to determine whether the casing of the portable terminal device is in a folded state; a browser running determination unit configured to determine whether a browser is running; a touch panel determination unit configured to determine content of a touch operation on a touch panel; a touch area determination unit configured to determine the section of a touch area in which the touch operation on the touch panel is performed; a long-press touch determination unit configured to determine whether a long-press touch operation is performed; and an execution unit configured to perform a predetermined action corresponding to a combination of determination results of the terminal shape determination unit, the browser running determination unit, the touch panel determination unit, the touch area determination unit, and the long-press touch determination unit.

Further, a method for operating a portable terminal device with a foldable casing in which both of a front display surface and a back display surface are configured as touch panels according to an embodiment of the present invention includes: a terminal shape determination step of determining whether the casing of the portable terminal device is in a folded state; a browser running determination step of determining whether a browser is running; a touch panel determination step of determining content of a touch operation on a touch panel; a touch area determination step of determining a section of a touch area in which the touch operation on the touch panel is being performed; a long-press touch determination step of determining whether a long-press touch operation is being performed; and an execution step of performing a predetermined action corresponding to a combination of determination results of the terminal shape determination step, the browser running determination step, the touch panel determination step, the touch area determination step, and the long-press touch determination step.

Further, a program for operating a portable terminal device with a foldable casing in which both of a front display surface and a back display surface are configured as touch panels according to an embodiment of the present invention causes the portable terminal device to be computer-controlled to perform: a terminal shape determination step of determining whether the casing of the portable terminal device is in a folded state; a browser running determination step of determining whether a browser is running; a touch panel determination step of determining content of a touch operation on a touch panel; a touch area determination step of determining the section of a touch area in which the touch operation on the touch panel is being performed; a long-press touch determination step of determining whether a long-press touch operation is being performed; and an execution step of performing a predetermined action corresponding to a combination of determination results of the terminal shape determination step, the browser running determination step, the touch panel determination step, the touch area determination step, and the long-press touch determination step.

### [Effect of the Invention]

As is apparent from the above description, according to the present invention, a site being viewed can be prevented from being obstructed by, for example, fingers of a user during a touch operation. Further, the user can perform the touch operation without needing to recognize a detailed touch position since the touch area on the touch panel is divided into a plurality of areas. Further, there is an effect that a greater selection of items can be input without newly providing, for example, operation buttons in a small arrangement space of the body of the portable terminal device.

### BRIEF DESCRIPTION OF DRAWINGS

FIG. 1 is a configuration diagram showing a block configuration of a portable terminal device according to an embodiment of the present invention.
Fig. 2A is an external view showing an appearance of the portable terminal device according to an embodiment of the present invention, showing a front surface in a state in which the portable terminal device is folded.
FIG. 2B is a diagram showing a back surface in a state in which the portable terminal device is folded according to an embodiment of the present invention.
FIG. 2C is a diagram showing the front surface and the back surface in a state in which the portable terminal device is opened according to an embodiment of the present invention.
FIG. 3A is a diagram showing an area of a back display surface in the portable terminal device according to an embodiment of the present invention, and is a diagram showing an area configuration of an upper area, a central area, and a touch area.
FIG. 3B is a diagram showing a list of operations on the area of the back display surface and a list of actions corresponding to the operations in the portable terminal device according to an embodiment of the present invention.
FIG. 4 is a diagram showing an example of a method for operating a display screen in the portable terminal device according to an embodiment of the present invention.
FIG. 5 is a diagram showing an example of the method for operating a display screen in the portable terminal device according to an embodiment of the present invention.
FIG. 6 is a diagram showing an example of the method for operating a display screen in the portable terminal device according to an embodiment of the present invention.
FIG. 7 is a flowchart diagram showing an action procedure in a display screen touch operation of the portable terminal device according to an embodiment of the present invention.

### EMBODIMENTS FOR CARRYING OUT THE INVENTION

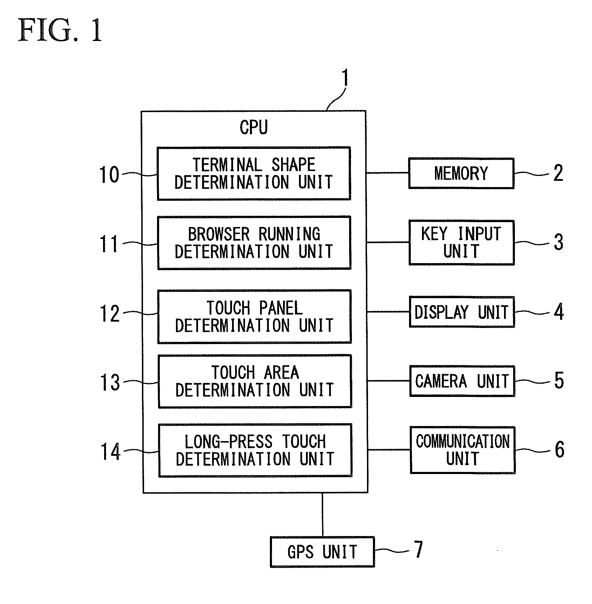

Hereinafter, an embodiment of a portable terminal device, a method for operating a portable terminal device, and a program for operating a portable terminal device according to an embodiment of the present invention will be described in the detail with reference to the drawings. FIG. 1 is a configuration diagram showing a block configuration of the portable terminal device according to an embodiment of the present invention. The portable terminal device of this embodiment shown in FIG. 1 includes a CPU 1, a memory 2, a key input unit 3, a display unit 4, a camera unit 5, a communication unit 6, and a GPS unit 7. However, the display unit 4, the camera unit 5, the communication unit 6, and the GPS unit 7 are components that can be added, and any of them can be omitted. For example, an acceleration sensor that detects acceleration, which is added to the portable terminal device of this embodiment, can be further included. Further, the display unit 4 is assumed to include a touch input function.

The CPU 1 includes a terminal shape determination unit 10, a browser running determination unit 11, a touch panel determination unit 12, a touch area determination unit 13, and a long-press touch determination unit 14. In addition thereto, the CPU 1 is assumed to include a control unit that controls the entire portable terminal device, and a browser viewing unit. Further, the CPU 1 can include a game execution unit or an execution unit that executes other application software. The CPU 1 controls the entire portable terminal device of this embodiment by the control unit according to a control method conforming to a stored programming scheme, and executes processes of the terminal shape determination unit 10, the browser running determination unit 11, the touch panel determination unit 12, the touch area determination unit 13, and the long-press touch determination unit 14.

The memory 2 stores a program to be executed by the CPU 1, and stores data necessary for execution of various applications, including the processes of the terminal shape determination unit 10, the browser running determination unit 11, the touch panel determination unit 12, the touch area determination unit 13, and the long-press touch determination unit 14.

The key input unit 3 inputs a startup instruction and an operation instruction of the portable terminal device of this embodiment, and inputs data or an instruction necessary for acquiring an image. The display unit 4 displays photographic image data, or an instruction or data for a photographer. The camera unit 5 photographs a subject, performs a conversion to photographic image data, and outputs the photographic image data after the conversion to the CPU 1. The communication unit 6 performs communication with other devices over a portable telephone network or an Internet network. The GPS unit 7 acquires a position (latitude and longitude) of the portable terminal device. The portable terminal device according to the embodiment of the present invention is applicable to a general electronic device in which a touch panel is mounted on both front and back display surfaces and a browser enabling reading of website information is mounted. Specifically, the portable terminal device may be a digital camera, a portable phone device, a portable information processing device, or a game device.

The terminal shape determination unit 10 of the CPU 1 determines whether the portable terminal device is being used in an opened state or a closed state (for example, a folded state). The browser running determination unit 11 of the CPU 1 determines whether the browser that is executed by the CPU 1 of the portable terminal device is running. The touch panel determination unit 12 of the CPU 1 performs a determination as to whether a touch operation is being performed on a back screen (a back display surface to be described below) and a determination as to whether a touch operation is being performed on only the back screen. The touch area determination unit 13 of the CPU 1 performs a determination as to whether a touch operation is being performed on an upper screen area (to be described below) and a determination as to whether a touch operation is being performed on a central screen area (to be described below). The long-press touch determination unit 14 performs a determination as to whether a touch operation is being performed having a predetermined length greater than a normal touch length.

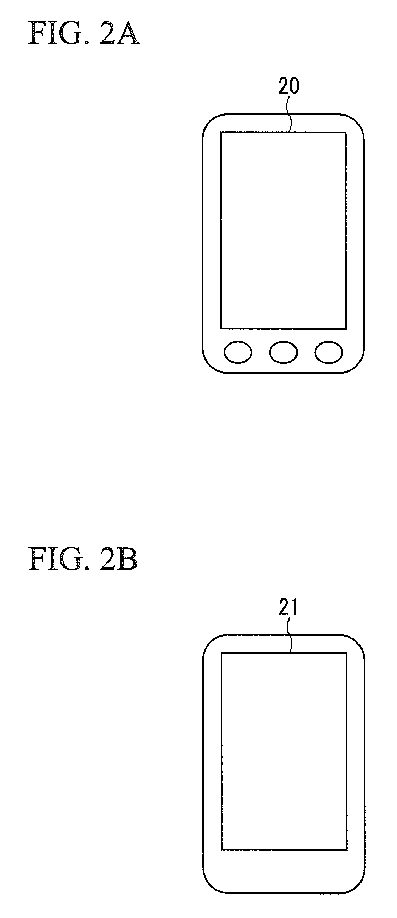

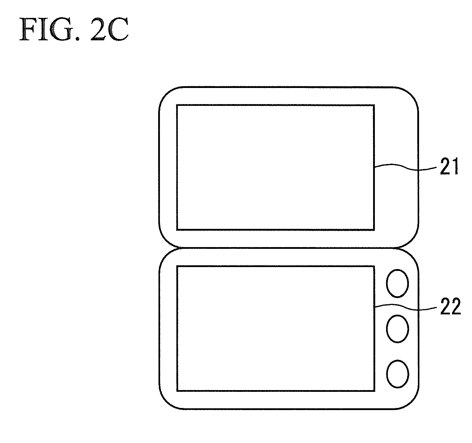

Figs. 2A to 2C are external views showing an appearance of the portable terminal device according to an embodiment of the present invention. FIG. 2A shows a front surface in a state in which the portable terminal device is folded, FIG. 2B shows a back surface in a state in which the portable terminal device is folded, and FIG. 2C shows the front and back surfaces in a state in which the portable terminal device is opened. The portable terminal device shown in Figs. 2A to 2C includes a front display surface 20 and a back display surface 21. Hereinafter, a function of the portable terminal device according to this embodiment will be described with reference to FIG. 1 and Figs. 2A to 2C. In a state in which the portable terminal device is opened (FIG. 2C), screens of the front display surface 20 and the back display surface 21 are treated as one terminal front display surface. Thus, a touch operation on the screen of any one of the front display surface 20 and the back display surface 21 is regarded as a touch on the terminal front display surface being performed.

The CPU 1 (FIG. 1) determines whether the portable terminal device is in the folded state (Figs. 2A and 2B) or in the opened state (FIG. 2C) through the terminal shape determination unit 10 at a start time of a touch operation on the front display surface 20 and the back display surface 21. Further, the CPU 1 determines whether the browser is in a startup state through the browser running determination unit 11. When the browser is not in a startup state, the CPU 1 controls the touch action according to other application software that is running, rather than the browser.

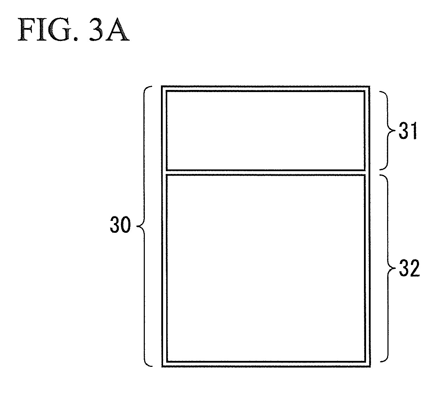

More specifically, the CPU 1 performs a determination as to whether a touch operation on only the back display surface 21 is performed through the touch panel determination unit 12 in the touch operation. In this case, when the touch operation on the front display surface 20 is also executed, priority is given to an input of the touch operation on the front display surface 20 irrespective of a presence or absence of the touch operation on the back display surface 21. Thereafter, the CPU 1 determines whether the touch operation is performed in a certain area of the back display surface 21 through the touch area determination unit 13. Here, an upper area of about 1/3 of the screen is defined as the upper area 31, and the other area is defined as the central area 32, as shown in FIG. 3A. Thus, the CPU 1 performs a determination of the touch operation on each area through the touch area determination unit 13 and a determination of the long-press operation through the long-press touch determination unit 14 to thereby perform an action (input action or displayed image update action) corresponding to each touch operation.

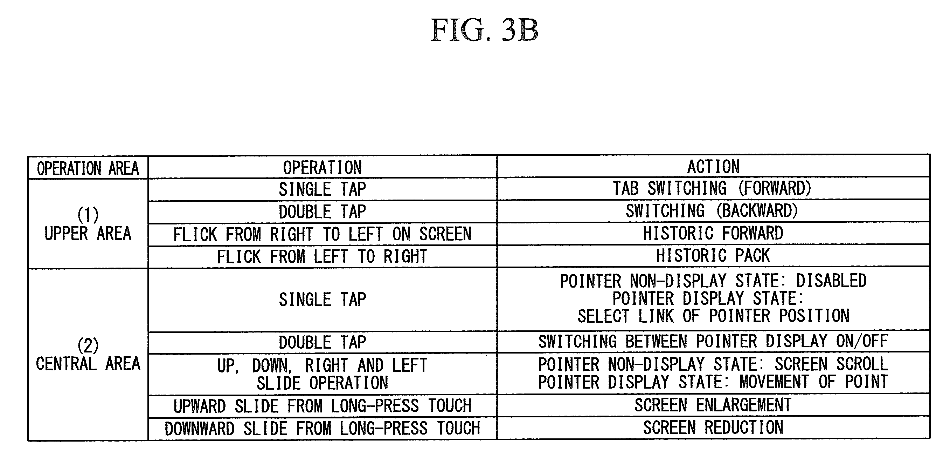

Figs. 3A and 3B are diagrams showing the area of the back display surface 21. FIG. 3A shows an area configuration, and FIG. 3B shows a list of operations in each area and a list of actions corresponding to these operations. As shown in FIG. 3A, the area of the back display surface 21 defines an area of the entire touch area 30, and the upper area 31 occupying an upper 1/3 area of the entire touch area 30, and the central area 32 below the upper area 31, for example, are independently provided in the entire touch area 30.

Here, as examples of allowed operations, a single tap, a double tap, a flick from right to left on the screen, and a flick from left to right on the screen are defined in the upper area 31. Further, a single tap, a double tap, right and left slide on the screen, upward slide from the long-press touch, and downward slide from the long-press touch are defined in the central area 32. Further, the list of operations and the list of actions corresponding to these operations in each area shown in FIG. 3B are only examples, and any other definitions are possible.

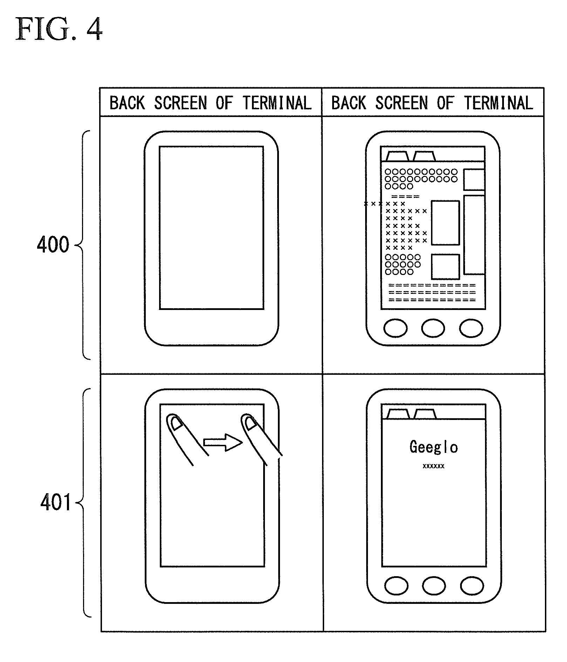

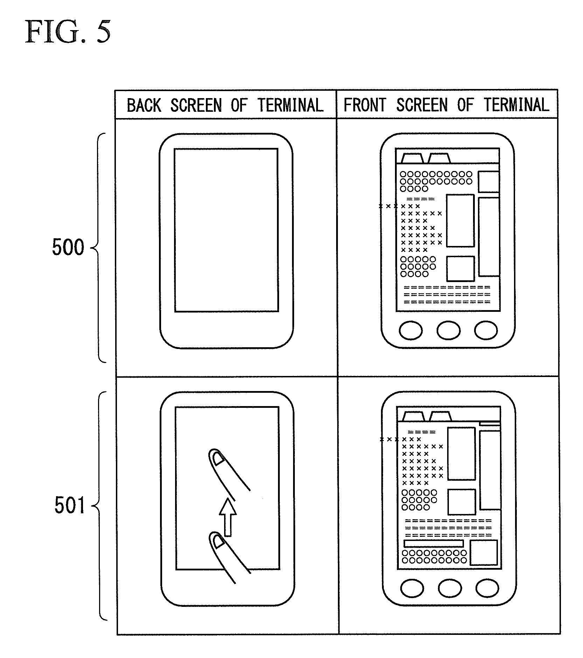

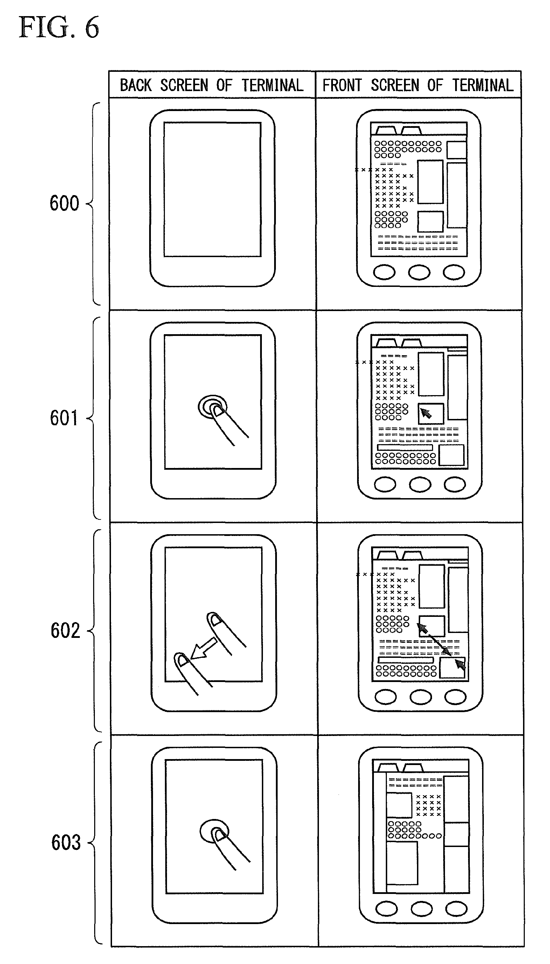

Figs. 4 to 6 are diagrams showing an example of the method for operating the display screen. More specifically, Figs. 4 to 6 show an operation of the back display surface 21 and a resultant transition state of a displayed image on the front display surface 20. Here, FIG. 4 shows both of the screens during browser running 400, and a method for operating a display screen called "historic operation" (historic pack operation 401). Further, FIG. 5 shows both of the screens during browser running 500, and a screen scrolling operation method (scroll operation 501). Further, FIG. 6 shows both of the screens during browser running 600, and a link selection method. Further, FIG. 6 shows a pointer display operation (pointer display 601), a pointer moving operation (pointer movement 602), and a link selection operation (link selection 603) as such a link selection method.

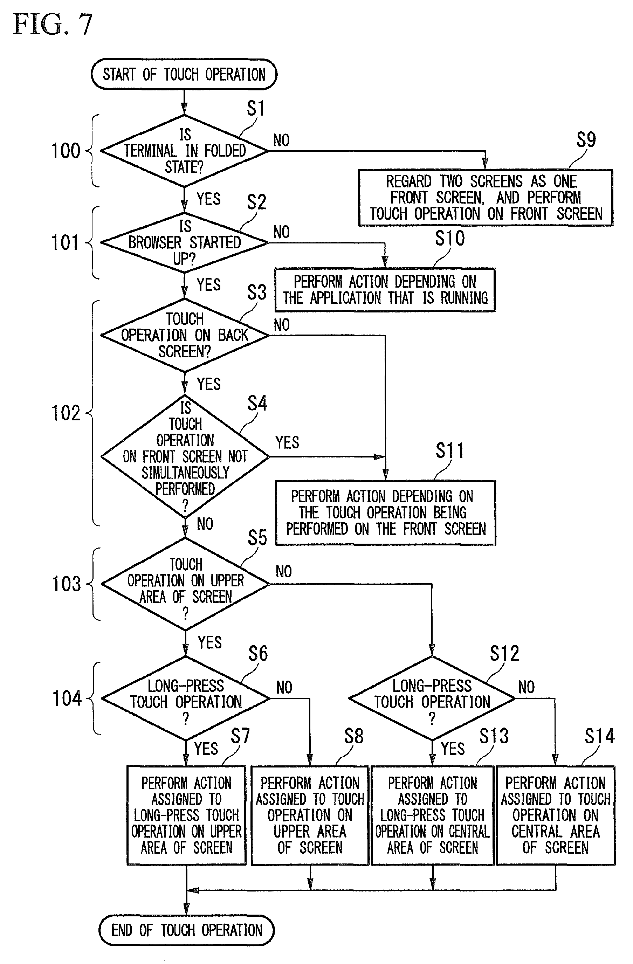

FIG. 7 is a flowchart diagram showing an action procedure in a display screen touch operation of the portable terminal device according to an embodiment of the present invention. The action procedure in the display screen touch operation of the portable terminal device according to this embodiment will be described using the flowchart shown in FIG. 7 with reference to Figs. 1 to 6. First, in a terminal shape determination indicated by reference number 100, the terminal shape determination unit 10 determines whether the portable terminal device is in a folded state in step S1. When the portable terminal device is in a folded state, the process proceeds to step S2. Further, when the portable terminal device is not in a folded state, the process proceeds to step S9.

Then, in a browser running determination indicated by reference number 101, the browser running determination unit 11 determines whether the browser is running in step S2. When the browser is running, the process proceeds to step S3. Further, when the browser is not running, the process proceeds to step S10. Then, in a touch panel determination indicated by reference number 102, the touch panel determination unit 12 determines whether a touch operation is being performed on the back display surface 21 in step S3. When a touch operation is being performed on the back display surface 21, the process proceeds to step S4. Further, when no touch operation is being performed on the back display surface 21, the process proceeds to step S11. Then, in step S4, the touch panel determination unit 12 determines whether a touch operation on the front display surface 20 is not being simultaneously performed. When the touch operation on the front display surface 20 is not being simultaneously performed, the process proceeds to step S5. Further, when the touch operation on the front display surface 20 is being simultaneously performed, the process proceeds to step S11.

Then, in a touch area determination indicated by reference number 103, the touch area determination unit 13 determines whether a touch operation is being performed on the upper area 31 in step S5. If a touch operation is being performed on the upper area 31, the process proceeds to step S6. Further, when no touch operation is being performed on the upper area 31, the process proceeds to step S 12. Then, in step S6, the long-press touch determination unit 14 determines whether a long-press touch is being performed. When there is a long-press touch operation, the process proceeds to step S7. Further, when no long-press touch operation is being performed, the process proceeds to step S8.

In step S7, an input unit (not shown) of the CPU 1 performs an action assigned to the long-press touch operation on the upper area 31. In step S8, the input unit of the CPU 1 performs an action assigned to the touch operation on the upper area 31. In step S9, the input unit (not shown) of the CPU 1 regards the two screens of the front display surface 20 and the back display surface 21 as one front display surface, and performs the touch operation using the two screens as a touch operation of the one front display surface.

In step S10, the input unit of the CPU 1 performs an action according to an input rule or an input screen of an application that is running, rather than the browser that is not running. In step S11, the input unit of the CPU 1 performs the action according to the touch operation on the front display surface 20. In step S12, the long-press touch determination unit 14 determines whether a long-press touch operation is being performed. When a long-press touch operation is being performed, the process proceeds to step S 13. Further, when no long-press touch operation is being performed, the process proceeds to step S14.

In step S 13, the input unit of the CPU 1 performs the action assigned to the long-press touch operation on the central area 32. In step S8, the input unit of the CPU 1 performs an action assigned to the touch operation on the central area 32.

According to the terminal device of this embodiment, the view of a site is prevented from being blocked by, for example, a user's finger during a touch operation. Further, there is an effect that the user can perform the touch operation without needing to recognize a detailed touch position since a touch operation area of the back display surface 21 is greatly divided into the upper area 31 and the central area 32. Further, there is an effect that more selection items can be input without newly providing, for example, operation buttons in a small arrangement space of the body of the portable terminal device.

Further, at least some of the processes of the respective components of the terminal device according to the present invention are assumed to be executed under computer control. Also, a program that causes a computer to execute the above process using the procedure shown in the flowchart of FIG. 7 may be stored in a computer-readable recording medium, such as a semiconductor memory, a CD-ROM, or a magnetic tape, and distributed. Also, a computer, including at least a microcomputer, a personal computer, or a general computer, may read the above program from the above recording medium and execute the program.

Priority is claimed on Japanese Patent Application No. 2012-143757, filed June 27, 2012, the content of which is incorporated herein by reference.

### INDUSTRIAL APPLICABILITY

According to the present invention, it is possible to provide a portable terminal device, a method for operating a portable terminal device and a program for operating a portable terminal device in which the view of a site being viewed is prevented from being obstructed by a user's finger during a touch operation.

Some or all of the above embodiments can be described as follows, but the embodiments are not to be limited thereby.

(Supplementary note 1) A portable terminal device with a foldable casing in which both of a front display surface and a back display surface are configured as touch panels, the portable terminal device including: a terminal shape determination unit configured to determine whether the casing of the portable terminal device is in a folded state; a browser running determination unit configured to determine whether a browser is running; a touch panel determination unit configured to determine content of a touch operation on a touch panel; a touch area determination unit configured to determine the section of a touch area in which the touch operation on the touch panel is performed; a long-press touch determination unit configured to determine whether a long-press touch operation is performed; and an execution unit configured to perform a predetermined action corresponding to a combination of determination results of the terminal shape determination unit, the browser running determination unit, the touch panel determination unit, the touch area determination unit, and the long-press touch determination unit.

(Supplementary note 2) The portable terminal device according to supplementary note 1, wherein any one of an input action, and an update action of a display screen is included in the predetermined action of the execution unit.

(Supplementary note 3) The portable terminal device according to supplementary note 1 or 2, wherein, when the casing is not in a folded state, the execution unit regards two screens as one front display surface, and performs a predetermined action corresponding to a touch operation on the one front display surface including the two screens.

(Supplementary note 4) The portable terminal device according to supplementary note 1 or 2, wherein, when the casing is in a folded state and the browser is not running, the execution unit performs an action corresponding to an operation rule or an input screen of application software that is running.

(Supplementary note 5) The portable terminal device according to supplementary note 1 or 2, wherein, when the casing is in a folded state, the browser is running, and no touch operation is being performed on the back display surface or a touch operation is being performed on both the front display surface and on the back display surface, the execution unit performs a predetermined action corresponding to the touch operation on the front display surface.

(Supplementary note 6) The portable terminal device according to supplementary note 1 or 2, wherein, when the casing is in a folded state, the browser is running, a touch operation is being performed on the back display surface, no touch operation is being performed on the front display surface, no touch operation is being performed on an upper area defined in the back display surface, and there is a long-touch press operation, the execution unit performs an action assigned to the long-press operation on the upper area.

(Supplementary note 7) The portable terminal device according to supplementary note 1 or 2, wherein, when the casing is in a folded state, the browser is running, a touch operation is being performed on the back display surface, no touch operation is being performed on the front display surface, no touch operation is being performed on an upper area defined in the back display surface, and no long-press touch operation is being performed, the execution unit performs an action assigned to the touch operation on the upper area.

(Supplementary note 8) The portable terminal device according to supplementary note 1 or 2, wherein, when the casing is in a folded state, the browser is running, a touch operation is being performed on the back display surface, no touch operation is being performed on the front display surface, there is no touch operation on an upper area defined in the back display surface, and there is a long-touch press operation, the execution unit performs an action assigned to a long-press operation on a central area defined in the back display surface.

(Supplementary note 9) The portable terminal device according to supplementary note 1 or 2, wherein, when the casing is in a folded state, the browser is running, a touch operation is being performed on the back display surface, no touch operation is being performed on the front display surface, there is no touch operation on an upper area defined in the back display surface, and no long-press touch operation is being performed, the execution unit performs an action assigned to a touch operation on a central area defined in the back display surface.

(Supplementary note 10) A method for operating a portable terminal device with a foldable casing in which both of a front display surface and a back display surface are configured as touch panels, the method including: a terminal shape determination step of determining whether the casing of the portable terminal device is in a folded state; a browser running determination step of determining whether a browser is running; a touch panel determination step of determining content of a touch operation on a touch panel; a touch area determination step of determining a section of a touch area in which the touch operation on the touch panel is performed; a long-press touch determination step of determining whether a long-press touch operation is performed; and an execution step of performing a predetermined action corresponding to a combination of determination results of the terminal shape determination step, the browser running determination step, the touch panel determination step, the touch area determination step, and the long-press touch determination step.

(Supplementary note 11) A computer program for operating a portable terminal device with a foldable casing in which both of a front display surface and a back display surface are configured as touch panels, the program causing the portable terminal device to be computer-controlled to perform: a terminal shape determination step of determining whether the casing of the portable terminal device is in a folded state; a browser running determination step of determining whether a browser is running; a touch panel determination step of determining content of a touch operation on a touch panel; a touch area determination step of determining a section of a touch area in which the touch operation on the touch panel is performed; a long-press touch determination step of determining whether a long-press touch operation is performed; and an execution step of performing a predetermined action corresponding to a combination of determination results of the terminal shape determination step, the browser running determination step, the touch panel determination step, the touch area determination step, and the long-press touch determination step.

### [Description of Reference Symbols]

- 1: CPU
- 2: Memory
- 3: Key input unit
- 4: Display unit
- 10: Terminal shape determination unit
- 11: Browser running determination unit
- 12: Touch panel determination unit
- 13: Touch area determination unit
- 14: Long-press touch determination unit
- 20: Front display surface
- 21: Back display surface
- 30: Entire touch area
- 31: Upper area
- 32: Central area

## Claims

1. A portable terminal device with a foldable casing in which both of a front display surface and a back display surface are configured as touch panels, the portable terminal device comprising:
a terminal shape determination unit configured to determine whether the casing of the portable terminal device is in a folded state;
a browser running determination unit configured to determine whether a browser is running;
a touch panel determination unit configured to determine content of a touch operation on a touch panel;
a touch area determination unit configured to determine a section of a touch area on which the touch operation on the touch panel is performed;
a long-press touch determination unit configured to determine whether a long-press touch operation is being performed; and
an execution unit configured to perform a predetermined action corresponding to a combination of determination results of the terminal shape determination unit, the browser running determination unit, the touch panel determination unit, the touch area determination unit, and the long-press touch determination unit.

2. The portable terminal device according to claim 1,
wherein any one of an input action, and an update action of a display screen is included in the predetermined action of the execution unit.

3. The portable terminal device according to claim 1 or 2,
wherein, when the casing is not in a folded state, the execution unit regards two screens as one front display surface, and performs a predetermined action corresponding to a touch operation on the one front display surface including the two screens.

4. The portable terminal device according to claim 1 or 2,
wherein, when the casing is in a folded state and the browser is not running, the execution unit performs an action corresponding to an operation rule of application software that is running or an input screen.

5. The portable terminal device according to claim 1 or 2,
wherein, when the casing is in a folded state, the browser is running, and no touch operation is being performed on the back display surface or a touch operation is being performed on both the front display surface and on the back display surface, the execution unit performs a predetermined action corresponding to the touch operation on the front display surface.

6. The portable terminal device according to claim 1 or 2,
wherein, when the casing is in a folded state, the browser is running, a touch operation is being performed on the back display surface, no touch operation is being performed on the front display surface, no touch operation is being performed on an upper area defined in the back display surface, and a long-press touch operation is being performed, the execution unit performs an action assigned to the long-press operation on the upper area.

7. The portable terminal device according to claim 1 or 2,
wherein, when the casing is in a folded state, the browser is running, a touch operation is being performed on the back display surface, no touch operation is being performed on the front display surface, no touch operation is being performed on an upper area defined in the back display surface, and no long-press touch operation is being performed, the execution unit performs an action assigned to the touch operation on the upper area.

8. The portable terminal device according to claim 1 or 2,
wherein, when the casing is in a folded state, the browser is running, a touch operation is being performed on the back display surface, no touch operation is being performed on the front display surface, no touch operation is being performed on an upper area defined in the back display surface, and a long-press touch operation is being performed, the execution unit performs an action assigned to a long-press operation on a central area defined in the back display surface.

9. A method for operating a portable terminal device with a foldable casing in which both of a front display surface and a back display surface are configured as touch panels, the method comprising:
a terminal shape determination step of determining whether the casing of the portable terminal device is in a folded state;
a browser running determination step of determining whether a browser is running;
a touch panel determination step of determining content of a touch operation on a touch panel;
a touch area determination step of determining a section of a touch area in which the touch operation on the touch panel is performed;
a long-press touch determination step of determining whether a long-press touch operation is performed; and
an execution step of performing a predetermined action corresponding to a combination of determination results of the terminal shape determination step, the browser running determination step, the touch panel determination step, the touch area determination step, and the long-press touch determination step.

10. A program for operating a portable terminal device with a foldable casing in which both of a front display surface and a back display surface are configured as touch panels, the program causing the portable terminal device to be computer-controlled to perform:
a terminal shape determination step of determining whether the casing of the portable terminal device is in a folded state;
a browser running determination step of determining whether a browser is running;
a touch panel determination step of determining content of a touch operation on a touch panel;
a touch area determination step of determining a section of a touch area in which the touch operation on the touch panel is being performed;
a long-press touch determination step of determining whether a long-press touch operation is being performed; and
an execution step of performing a predetermined action corresponding to a combination of determination results of the terminal shape determination step, the browser running determination step, the touch panel determination step, the touch area determination step, and the long-press touch determination step.
